# EUROPÄISCHE PATENTANMELDUNG

(11) **EP 3 320 963 A1**
(43) Veröffentlichungstag der Anmeldung: **16.05.2018**
(21) Anmeldenummer: 16198907.4
(22) Anmeldetag: 15.11.2016
(51) Int. Cl.: B01D 53/14

(54) **VERFAHREN ZUR ABREICHERUNG VON AROMATISCHEM KOHLENWASSERSTOFF AUS EINEN ROHGASSTROM**

(71) Anmelder: BASF SE, 67056 Ludwigshafen am Rhein (DE)
(72) Erfinder: BREITSCHEIDEL, Boris, 67056 Ludwigshafen (DE); WELLHAUSEN, Tim, 67056 Ludwigshafen (DE); GAITZSCH, Friedemann, 67056 Ludwigshafen (DE); SCHUNCK, Peter, 67056 Ludwigshafen (DE); KRIHA, Olaf, 67056 Ludwigshafen (DE); STAUB, Stefan, 67056 Ludwigshafen (DE)
(74) Vertreter: BASF IP Association

(57) **Zusammenfassung**

Verfahren zur Abreicherung von aromatischem Kohlenwasserstoff aus einem Rohgasstrom, umfassend die Verwendung eines Absorptionsmediums, das eine oder mehrere Verbindungen der allgemeinen Formel (I): 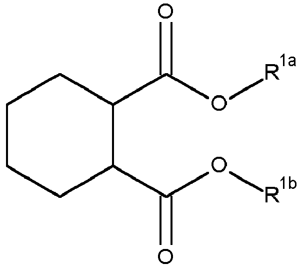 worin R^{1a} und R^{1b} unabhängig voneinander C₇ bis C₁₂-Alkyl sind
und/oder eine oder mehrere Verbindungen der allgemeinen Formel (II): 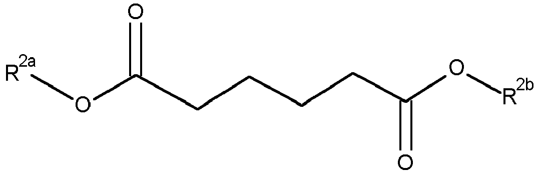 worin R^{2a} und R^{2b} unabhängig voneinander C₇ bis C₁₂-Alykl sind,
enthält.

## Beschreibung

Die Abtrennung und/oder Rückgewinnung von aromatischem Kohlenwasserstoff aus Gasströmen ist aufgrund der Toxizität dieser Verbindungen meist von generellem Interesse in der chemischen Industrie. Mit aromatischem Kohlenwasserstoff beladene Gasströme können beispielsweise beim An- und Abfahren von Anlagen, Entleeren oder Entlüften von Reaktionsbehältern, Rohrleitungen oder Tanklagern oder in anderen industriellen Prozessen, wie im Kokereiwesen, anfallen. Aromatischer Kohlenwasserstoff kann beispielsweise Benzol, Toluol, Xylole oder eine beliebige Mischung derer sein. Aufgrund der geringen Wasserlöslichkeit von aromatischem Kohlenwasserstoff, die meist unterhalb von 2 g /l bei 20°C pro enthaltener Verbindung liegt, erfolgt die Abtrennung aus den beladenen Gasströmen in der Regel durch Absorption des aromatischen Kohlenwasserstoffs in einem geeigneten Absorptionsmedium.

Im Allgemeinen wird bei der Absorption eine in der Gasphase vorliegende Verbindung in ein Absorptionsmedium aufgenommen. Die in der Gasphase vorliegende Verbindung, auch als Absorptiv bezeichnet, wird im Absorptionsmedium, auch als Absorbens bezeichnet, absorbiert. Dadurch kommt es zu einer Abreicherung der Verbindung aus der Gasphase. Im Idealfall kann die in der Gasphase vorliegende Verbindung durch Absorption soweit aus der Gasphase abgereichert werden, dass die Konzentration der Verbindung in der Gasphase unterhalb deren Nachweisegrenze liegt. Meist ist es jedoch ausreichend, dass die Konzentration der Verbindung in der Gasphase innerhalb der in der - Technische Anleitung zur Reinhaltung der Luft (TA Luft 2002) spezifizierten Emissionsgrenzen liegt.

Das Absorptionsmedium ist eine Flüssigkeit. Die im Absorbtionsmedium absorbierte Verbindung geht in der Regel keine chemische Reaktion mit diesem ein, sondern löst sich lediglich in diesem.

Die im Absorptionsmedium absorbierte Verbindung kann durch Desorption, beispielsweise durch Strippung, aus dem Absorptionsmedium rückgewonnen werden. Bei der Strippung wird das mit der absorbierten Verbindung beladene Absorptionsmedium mit einem Gasstrom in Kontakt gebracht, wodurch die im Absorptionsmedium absorbierte Verbindung wieder in die Gasphase übergeht. Als geeignete Gase für die Strippung können beispielsweise Wasserdampf, Stickstoff, Luft, Kohlenstoffdioxid oder eine beliebige Mischung derer eingesetzt werden. Vorteilhaft kann dabei zusätzlich die Temperatur erhöht und/oder der Umgebungsdruck abgesenkt werden. Im Idealfall kann die im Absorptionsmedium absorbierte Verbindung durch Desorption soweit aus diesem abgetrennt werden, dass die Konzentration der Verbindung im Absorptionsmedium unterhalb deren Nachweisegrenze liegt. Das beladene Absorptionsmedium kann durch Desorption regeneriert werden und wiederholt als Absorptionsmedium eingesetzt werden. Somit ergibt sich beispielsweise die Möglichkeit einer Kreislauffahrweise.

Mittels Absorption in einem Absorptionsmedium können auch Mischungen von mehreren voneinander unterschiedlichen Verbindungen aus der Gasphase abgereichert, beziehungsweise abgetrennt werden. Mittels Desorption können die in einem beladenen Absorptionsmedium enthaltenen Verbindungen wieder aus diesem abgetrennt werden. Im Idealfall werden alle in der Mischung enthaltenen Verbindungen aus dem Absorptionsmedium bis unter die jeweilige Nachweisgrenze entfernt.

Dem Fachmann sind verschiedene Verfahren zur Absorption von Gasströmen aus dem Stand der Technik bekannt oder erschließen sich ihm, aus seinem allgemeinen Fachwissen (beispielsweise aus VDI Richtlinien, Nassabscheider: Abgasreinigung durch Absorption (Wäscher), VDI 3679, Blatt 2, Juli 2014).

So offenbart die WO2009/003644 laut Beschreibung ein Verfahren zur Abreicherung von aromatischem Kohlenwasserstoff aus Kokereigas mit Biodiesel als Absorptionsmedium.

Der vorliegenden Offenbarung liegt die Aufgabe zugrunde, ein Verfahren zur Verfügung zu stellen, mit dem aromatischer Kohlenwasserstoff, insbesondere Benzol, aus einem Rohgasstrom abgereichert werden kann. Das eingesetzte Absorptionsmedium soll zudem leicht handhabbar und regenerierbar sein. Des Weiteren kann ein geringer Dampfdruck des Absorptionsmediums vorteilhaft sein um die Lösemittelverluste gering zu halten.

Vorliegend wird ein Verfahren zur Abreicherung von aromatischem Kohlenwasserstoff aus einem Rohgasstrom offenbart, umfassend die Verwendung eines Absorptionsmediums, das eine oder mehrere Verbindungen der allgemeinen Formel (I): 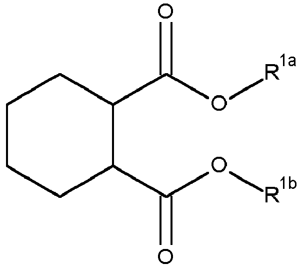
worin R^{1a} und R^{1b} unabhängig voneinander C₇- bis C₁₂-Alkyl sind
und/oder eine oder mehrere Verbindungen der allgemeinen Formel (II): 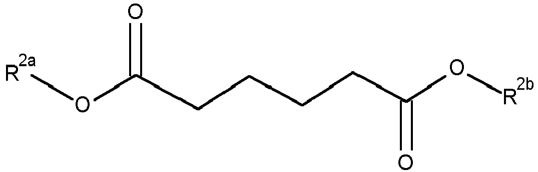
   worin R^{2a} und R^{2b} unabhängig voneinander C₇- bis C₁₂-Alkyl sind
   enthält.
   Es wird ein Absorptionsmedium, offenbart, das eine oder mehrere Verbindungen der allgemeinen Formel (I) und/oder Formel (II) enthält.

Auch wird die Verwendung einer oder mehrerer Verbindungen der allgemeinen Formel (I) und/oder einer oder mehrerer Verbindungen der allgemeinen Formel (II) als Bestandteil eines Absorptionsmediums offenbart.

Ein weiterer Gegenstand der Offenbarung ist eine Vorrichtung, speziell zur Abreicherung von aromatischem Kohlenwasserstoff aus einem Rohgasstrom, in der das offenbarte Absorptionsmedium im Gleich- oder Gegenstrom mit dem Rohgasstrom in Kontakt gebracht wird.

### Beschreibung der Erfindung:

Die Abreicherung von aromatischem Kohlenwasserstoff aus einem Rohgasstrom erfolgt in der Regel durch Absorption des aromatischen Kohlenwasserstoffs in einem Absorptionsmedium. Durch Absorption des aromatischen Kohlenwasserstoffs im Absorptionsmedium geht dieser in das Absorptionsmedium über. Der Übergang des aromatischen Kohlenwasserstoffs in das Absorptionsmedium kann als ein Lösen des aromatischen Kohlenwasserstoffs im Absorptionsmedium betrachtet werden. In der Regel kommt es zu keiner chemischen Reaktion des im Rohgasstrom enthaltenen aromatischen Kohlenwasserstoffs und des im Absorptionsmedium gelösten aromatischen Kohlenwasserstoffs mit dem Absorptionsmedium.

In der Regel liegt der aromatische Kohlenwasserstoff gasförmig im Rohgasstrom vor. Es kann jedoch auch sein, dass der aromatische Kohlenwasserstoff als fein verteilte Flüssigkeit im Rohgasstrom vorliegt. So kann der aromatische Kohlenwasserstoff beispielsweise als Nebel oder Aerosol im Rohgasstrom vorliegen. Natürlich kann es auch sein, dass Teile des aromatischen Kohlenwasserstoffs gasförmig und Teile des aromatischen Kohlenwasserstoffs flüssig im Rohgasstrom vorliegen. In welcher Form der aromatische Kohlenwasserstoff im Rohgasstrom vorliegt, kann beispielsweise vom aromatischen Kohlenwasserstoff selbst, der Konzentration des aromatischen Kohlenwasserstoffs im Rohgasstrom, der Temperatur und/oder vom Umgebungsdruck abhängig sein.

Die Absorption des aromatischen Kohlenwasserstoffs im Absorptionsmedium hängt im Allgemeinen von verschiedenen Parametern, wie der Temperatur des Rohgasstroms, der Temperatur des Absorptionsmediums und/oder dem Umgebungsdruck, ab. Durch Absorption im Absorptionsmedium wird der aromatische Kohlenwasserstoff teilweise oder vollständig aus dem Rohgasstrom abgereichert. Aromatischer Kohlenwasserstoff kann ein aromatischer Kohlenwasserstoff oder eine beliebige Mischung verschiedener aromatischer Kohlenwasserstoffe sein. Da es sich bei aromatischem Kohlenwasserstoff um eine beliebige Mischung von verschiedenen aromatischen Kohlenwasserstoffen handeln kann, kann es sein, dass einer oder mehrere aromatische Kohlenwasserstoffe der Mischung durch Absorption im Absorptionsmedium besser aus dem Rohgasstrom abgereichert werden als andere. Wenn eine oder mehrere aromatische Kohlenwasserstoffe vollständig aus dem Rohgasstrom abgereichert werden, ist deren Konzentration im Rohgasstrom in der Regel unterhalb der jeweiligen Nachweisgrenze, beziehungsweise der jeweiligen Nachweisgrenzen.

Ein aromatischer Kohlenwasserstoff kann einen oder mehrere aromatische Ringe aufweisen. Weist ein aromatischer Kohlenwasserstoff mehr als einen aromatischen Ring auf, können die aromatischen Ringe anelliert, durch Alkylbrücken, durch eine direkte Bindung und/oder durch Heteroatome verknüpft vorliegen.

Ein aromatischer Kohlenwasserstoff besteht in der Regel aus Kohlenstoff und Wasserstoff. Ein aromatischer Kohlenwasserstoff kann aber auch ein oder mehrere Heteroatome im aromatischen Ring aufweisen. Ein Heteroatom kann beispielsweise, Stickstoff, Sauerstoff oder Schwefel sein.

Ein aromatischer Kohlenwasserstoff kann einen oder mehrere Substituten am aromatischen Ring aufweisen. Bei mehreren Substituenten können die Substituten voneinander unterschiedlich oder identisch sein. Bei einem aromatischen Kohlenwasserstoff mit mehr als einem aromatischen Ring kann jeder Ring unabhängig voneinander einen oder mehrere Substituenten aufweisen.

Ein Substitut am aromatischen Ring kann beispielsweise C₁- bis C₆-Alkyl sein. C₁- bis C₆-Alkyl kann geradkettig oder verzweigt sein. Beispielsweise kann C₁- bis C₆-Alkyl Methyl, Ethyl, Propyl, iso-Propyl, n-Butyl, iso-Butyl, n-Pentyl, 2-Pentyl, 3-Pentyl, 2-Methylbutyl, 3-Methylbutyl, 3-Methylbut-2-yl, 2-Methylbut-2-yl, 2,2-Dimethylpropyl, n-Hexyl, 2-Methylpentyl, 3-Methylpentyl, 2,3-Dimethylbutyl oder 2,2-Dimehtylbutyl sein. C₁- bis C₆-Alkyl kann auch einen anellierten Ring mit dem aromatischen Ring bilden.

Ein Substituent am aromatischen Ring kann beispielsweise auch C₂- bis C₆-Alkyl mit mindestens einer Doppelbindung in der Alkylkette sein. C₂- bis C₆-Alkyl mit mindestens einer Doppelbindung in der Alkylkette kann geradkettig oder verzweigt sein. Beispielsweise kann C₂- bis C₆-Alkyl mit mindestens einer Doppelbindung in der Alkylkette Vinyl oder Allyl sein. C₃- bis C₆-Alkyl mit mindestens einer Doppelbindung in der Alkylkette kann auch einen anellierten Ring mit dem aromatischen Ring bilden.

Ein Substituent am aromatischen Ring kann beispielsweise C₁- bis C₄-Alkyl mit mindestens einem Heteroatom in der Alkylkette sein. Das Heteroatom kann dabei direkt mit dem aromatischen Ring verbunden sein. Beispielsweise kann C₁- bis C₄-Alkyl mit mindestens einem Heteroatom in der Alkylkette Methoxy, Ethoxy, Propoxy, iso-Propoxy, n-Butoxy, iso-Butoxy, tert-Butoxy, Dimethylamino, Methylthio oder Ethylthio sein. C₂- bis C₄-Alkyl mit mindestens einem Heteroatom in der Alkylkette kann auch einen anellierten Ring mit dem aromatischen Ring bilden.

Ein Substituent am aromatischen Ring kann beispielsweise auch ein Heteroatom sein, dessen freie Valenzen mit Wasserstoffatomen gesättigt sind. Heteroatomsubstituenten, deren freie Valenzen mit Wasserstoffatomen gesättigt sind können beispielsweise -NH₂, -OH oder-SH sein.

Aromatischer Kohlenwasserstoff kann beispielsweise Pyridin, Quinolin, Indol, Thiophen, Benzol, Toluol, o-Xylol, m-Xylol, p-Xylol, Ethylbenzol, Styrol, Indan, Inden, Naphthalin oder eine beliebige Mischung derer sein. Meist handelt es sich bei aromatischem Kohlenwasserstoff um Benzol, Toluol, o-Xylol, m-Xylol, p-Xylol, Ethylbenzol, Styrol, Indan, Inden, oder eine beliebige Mischung derer. Im Speziellen handelt es sich bei aromatischem Kohlenwasserstoff um Benzol und/oder Toluol.

Ein Rohgasstrom enthält in der Regel aromatischen Kohlenwasserwasserstoff und ein Trägergas. Ein Trägergas kann Luft, Stickstoff, Sauerstoff, Argon, Helium, Kohlenstoffdioxid oder eine beliebige Mischung derer sein. Meist handelt es sich bei dem Trägergas um Luft, Wasserdampf, Stickstoff oder eine beliebige Mischung derer.

Ein Rohgasstrom kann beispielsweise Benzol, Toluol, o-Xylol, m-Xylol, p-Xylol, Ethylbenzol, Styrol, Indan, Inden oder eine beliebige Mischung derer und Luft und/oder Stickstoff enthalten. Meist enthält ein Rohgasstrom Benzol und/oder Toluol und Luft und/oder Stickstoff enthalten.

Ein Rohgasstrom kann beispielsweise ein Abgasstrom oder Prozessgasstrom sein. Ein Abgasstrom kann beispielsweise bei der Entlüftung eines Tanklagers für aromatische Kohlenwasserstoffe oder bei der Entlüftung eines Reaktors oder Rohrleitung, die mit aromatischen Kohlenwasserstoffen in Kontakt gekommen sind, anfallen. In der Regel wird ein Abgasstrom in keinem weiteren Prozessschritt verwendet. Ein Prozessgasstrom kann beispielsweise beim An- und Abfahren von Anlagen, die mit aromatischen Kohlenwasserstoffen in Kontakt gekommen sind, oder im Kokereiwesen, wie bei der Verkokung von Kohle, anfallen. Es kann sein, dass ein Prozessgasstrom in einem weiteren, sich direkt oder indirekt anschließenden, Prozessschritt (weiter)verwendet wird.

Im Allgemeinen wird das offenbarte Verfahren zur Abreicherung von aromatischem Kohlenwasserstoff aus einem Rohgasstrom eingesetzt wird, wobei der Rohgasstrom 10 bis 100000 mg/Nm³ an aromatischem Kohlenwasserstoff enthält. Es ist bevorzugt, dass der Rohgasstrom 20 bis 80000 mg/Nm³ an aromatischem Kohlenwasserstoff und weiter 30 bis 60000 mg/Nm³ an aromatischem Kohlenwasserstoff enthält.

Im Allgemeinen enthält ein Absorptionsmedium eine oder mehrere Verbindungen der allgemeinen Formel (I) und/oder eine oder mehrere Verbindungen der allgemeinen Formel (II). Im speziellen kann es sich bei dem offenbarten Absorptionsmedium um ein Absorptionsmedium für Kohlenwasserstoff und weiter für aromatischen Kohlenwasserstoff handeln.

In einer Verbindung der allgemeinen Formel (I) sind R^{1a} und R^{1b} unabhängig voneinander C₇-bis C₁₂-Alykl. C₇- bis C₁₂-Alkyl kann geradkettig oder verzweigt sein. Beispielsweise kann C₇- bis C₁₂-Alkyl n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl sein. Es kann bevorzugt sein, dass R^{2a} und R^{2b} unabhängig voneinander C₈- bis C₉-Alkyl sind. C₈- bis C₉-Alkyl kann geradkettig oder verzweigt sein. Beispielsweise kann C₈- bis C₉-Alkyl n-Octyl, Isooctyl, 2-Ethylhexyl, n-Nonyl, Isononyl sein.

In einer Verbindung der allgemeinen Formel (II) sind R^{2a} und R^{2b} unabhängig voneinander C₇-bis C₁₂-Alykl. C₇- bis C₁₂-Alkyl kann geradkettig oder verzweigt sein. Beispielsweise kann C₇- bis C₁₂-Alkyl n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl sein. Es kann bevorzugt sein, dass R^{2a} und R^{2b} unabhängig voneinander C₈- bis C₉-Alkyl sind. C₈- bis C₉-Alkyl kann geradkettig oder verzweigt sein. Beispielsweise kann C₈- bis C₉-Alkyl n-Octyl, Isooctyl, 2-Ethylhexyl, n-Nonyl, Isononyl sein.

Das offenbarte Absorptionsmedium enthält in der Regel größtenteils eine oder mehrere Verbindungen der allgemeinen Formel (I) und/oder Formel (II). Der Gehalt an einer oder mehrerer Verbindungen der allgemeinen Formel (I) und/oder Formel (II) im offenbarten Absorptionsmedium ist in der Regel mindestens 80 Gewichtsprozent bezogen auf die Gesamtmasse des Absorptionsmediums. Es kann bevorzugt sein, dass der Gehalt an einer oder mehrerer Verbindungen der allgemeinen Formel (I) und/oder Formel (II) mindestens 85 Gewichtsprozent und weiter mindestens 95 Gewichtsprozent ist.

Das Absorptionsmedium kann zudem Zusatzstoffe enthalten. Zusatzstoffe können beispielsweise so gewählt werden, dass sie die Absorptionseigenschaften und/oder Stabilität und/oder Verwendungseigenschaften des Absorptionsmediums positiv beeinflussen. So kann das Absorptionsmedium beispielsweise Zusatzstoffe enthalten, die die Viskosität erniedrigen. Zusatzstoffe, die die Verwendungseigenschaften positiv beeinflussen können beispielsweise Frostschutzmittel, oder Entschäumungsmittel sein. Das Absorptionsmedium kann einen oder mehrere Zusatzstoffe enthalten. Bei der Wahl der Zusatzstoffe orientiert sich der Fachmann an den jeweils einsatzspezifischen Anforderungen.

Das Absorptionsmedium kann auch eine oder mehrere Verbindungen enthalten, die sich zur Absorption von Kohlenwasserstoff und insbesondere aromatischem Kohlenwasserstoff eigenen und die von den Verbindungen der allgemeinen Formel (I) oder (II) unterschiedlich sind. Eine solche Verbindung kann beispielsweise eine Verbindung der allgemeinen Formel (III), ein Silikonöl, ein Paraffin, ein hochsiedender Ester, der keine Verbindung der allgemeinen Formel (I), (II) oder (III) ist, oder ein Ehtlenglykoldialkylether oder eine beliebige Mischungen derer sein.

Eine Verbindung der allgemeinen Formel (III) ist:

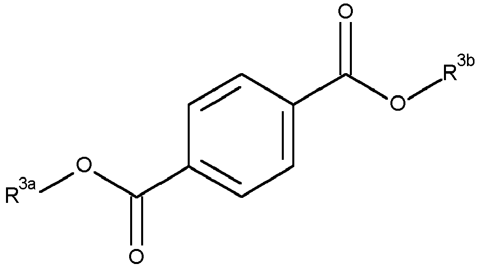

In einer Verbindung der allgemeinen Formel (III) sind R^{3a} und R^{3b} unabhängig voneinander C₇ bis C₁₂-Alykl. C₇ bis C₁₂-Alkyl kann geradkettig oder verzweigt sein. Beispielsweise kann C₇ bis C₁₂-Alkyl n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl sein. Eine Verbindung der allgemeinen Formal (III) kann beispielsweise Di-(2-ethylhexyl)-terephthalat sein.

Weitere Verbindungen sind dem Fachmann bekannt oder erschließen sich im anhand praktischer Überlegungen oder aus dem allgemeinen Fachwissen (Schultes, Abgasreinigung & Geisthardt, K. Chem. Eng. Technol. 12(1989) 63 bis 70, VDI Richtlinien, Nassabscheider: Abgasreinigung durch Absorption (Wäscher), VDI 3679, Blatt 2, Juli 2014).

Es kann bevorzugt sein, dass das Absorptionsmedium eine oder mehrere Verbindungen der allgemeinen Formel (I) oder eine oder mehrere Verbindungen der allgemeinen Formel (II) enthält. Es kann weiter bevorzugt sein, dass das Absorptionsmedium eine Verbindung der allgemeinen Formel (I) enthält und R^{1a} und R^{1b} identisch sind oder eine Verbindung der allgemeinen Formel (II) enthält und R^{2a} und R^{2b} identisch sind. Es kann besonders bevorzugt sein, dass das Absorptionsmedium Di-(isononyl)-1,2-cyclohexansäuredicarboxylat oder Di-(2-ethylhexyl)-adipat enthält.

So kann es bevorzugt sein, dass das Absorptionsmedium mindestens 80 Gewichtsprozent, bezogen auf die Gesamtmasse des Absorptionsmediums, an einer Verbindung der allgemeinen Formel (I) oder allgemeinen Formel (II) enthält. Es kann weiter bevorzugt sein, dass das Absorptionsmedium mindestens 80 Gewichtsprozent an einer Verbindung der allgemeinen Formel (I) in der R^{1a} und R^{1b} identisch sind oder an einer Verbindung der allgemeinen Formel (II) in der R^{2a} und R^{2b} identisch sind enthält. Es kann besonders bevorzugt sein, dass das Absorptionsmedium mindestens 80 Gewichtsprozent an Di-(isononyl)-1,2-cyclohexansäuredicarboxylat oder 80 Gewichtsprozent an Di-(2-Ethylhexyl)-adipat enthält.

Ein Verfahren zur Abreicherung von aromatischem Kohlenwasserstoff aus einem Rohgasstrom kann demnach umfassen;
die Verwendung eines Absorptionsmediums, das eine oder mehrere Verbindungen der allgemeinen Formel (I) und oder Formel (II) enthält,
oder,
die Verwendung eines Absorptionsmediums, das eine oder mehrere Verbindungen der allgemeinen Formel (I) und/oder eine oder mehrere Verbindungen der allgemeinen Formel (II) enthält, wobei der aromatische Kohlenwasserstoff Benzol und/oder Toluol enthält
oder,
die Verwendung eines Absorptionsmediums, das eine Verbindung der allgemeinen Formel (I) enthält und R^{1a} und R^{1b} identisch sind, oder das eine Verbindung der allgemeinen Formel (II) enthält und R^{2a} und R^{2b} identisch sind
oder,
die Verwendung eines Absorptionsmediums, das eine Verbindung der allgemeinen Formel (I) enthält und R^{1a} und R^{1b} identisch sind, oder das eine Verbindung der allgemeinen Formel (II) enthält und R^{2a} und R^{2b} identische sind, wobei der Gehalt an der Verbindung der allgemeinen Formel (I) oder Formel (II) im Absorptionsmedium mindestens 80 Gewichtsprozent ist
oder,
die Verwendung eines Absorptionsmediums, das Di-(isononyl)-1,2-cyclohexansäuredicarboxylat enthält
oder,
die Verwendung eines Absorptionsmediums, das Di-(isononyl)-1,2-cyclohexansäuredicarboxylat enthält, wobei der Gehalt an Di-(isononyl)-1,2-cyclohexansäuredicarboxylat im Absorptionsmedium mindestens 80 Gewichtsprozent ist
oder,
die Verwendung eines Absorptionsmediums, das Di-(isononyl)-1,2-cyclohexansäuredicarboxylat enthält, wobei der Gehalt an Di-(isononyl)-1,2-cyclohexansäuredicarboxylat im Absorptionsmedium mindestens 80 Gewichtsprozent ist, und wobei der aromatische Kohlenwasserstoff Benzol und/oder Toluol enthält
oder,
die Verwendung eines Absorptionsmediums, das Di-(2-ethylhexyl)-adipat enthält
oder,
die Verwendung eines Absorptionsmediums, das Di-(2-ethylhexyl)adipat enthält, wobei der Gehalt an Di-(2-ethylhexyl)-adipat im Absorptionsmedium mindestens 80 Gewichtsprozent ist.

Das offenbarte Verfahren zur Abreicherung von aromatischem Kohlenwasserstoff aus einem Rohgasstrom kann auch in Kombination mit anderen Verfahren, die der Gasreinigung dienen, kombiniert werden. Das offenbarte Verfahren kann einem solchen Verfahren vor- und/oder nachgeschaltet sein. So kann das offenbarte Verfahren beispielsweise mit einem Filtrationsverfahren und/oder Kondensationsverfahren und/oder Membranverfahren kombiniert werden. Das offenbarte Verfahren kann beispielsweise auch mit anderen Verfahren kombiniert werden, die dem Fachmann bekannt sind oder die sich ihm aus dem allgemeinen Fachwissen erschließen.

Eine oder mehrere Verbindungen der allgemeinen Formel (I) und/oder Formel (II) können demnach als Bestandteil eines Absorptionsmediums verwendet werden. Speziell können eine oder mehrere Verbindungen der allgemeinen Formel (I) und/oder Formel (II) als Bestandteil eines Absorptionsmediums für Kohlenwasserstoff und weiter für aromatischen Kohlenwasserstoff verwendet werden. Es kann bevorzugt sein, dass eine Verbindung der allgemeinen Formel (I), in der R^{1a} und R^{1b} identisch sind, oder eine Verbindung der allgemeinen Formel (II), in der R^{2a} und R^{2b} identisch sind, als Bestandteil eines Absorptionsmediums verwendet wird. Es kann weiter bevorzugt sein, dass Di-(isononyl)-1,2-cyclohexansäuredicarboxylat oder Di-(2-ethylhexyl)-adipat als Bestandteil eines Absorptionsmediums verwendet wird.

Die Abreicherung von aromatischem Kohlenwasserstoff aus dem Rohgasstrom mit dem offenbarten Absorptionsmedium kann in einem Wäscher erfolgen. Es können auch mehrere Wäscher, beispielsweise zwei oder mehr Wäscher, in Reihe und/oder parallel geschaltet werden. Es können auch mehrere Wäscher in Reihe geschaltet werden, wobei das Absorptionsmedium in einem oder mehreren Wäschern zu dem offenbarten Absorptionsmedium unterschiedlich ist, das offenbarte Absorptionsmedium aber in mindestens einem Wäscher ist. Die Reihenfolge der in Reihe geschalteten Wäscher mit unterschiedlichen Absorptionsmedium kann beliebig sein. Bei der Anordnung der Wäscher lässt sich der Fachmann von praktischen und prozessspezifischen Überlegungen und/oder vom allgemeinen Fachwissen leiten.

So kann beispielsweise in einem ersten Wäscher das Absorptionsmedium das offenbarte Absorptionsmedium sein und in einem zweiten, in Reihe geschalteten, Wäscher, kann das Absorptionsmedium zu dem offenbarten Absorptionsmedium unterschiedlich sein. Ein zu dem offenbarten Absorptionsmedium unterschiedliches Absorptionsmedium ist frei von Verbindungen der allgemeinen Formel (I) und/oder Formel (II).

Ein zu dem offenbarten Absorptionsmedium unterschiedliches Absorptionsmedium kann polar oder unpolar sein. Ein zu dem offenbarten Absorptionsmedium unterschiedliches Absorptionsmedium kann beispielsweise dazu dienen organische Verbindungen und insbesondere aromatischen Kohlenwasserstoff weiter aus dem Rohgasstrom abzureichern. Bei organischen Verbindungen kann es sich neben aromatischem Kohlenwasserstoff auch um nichtaromatischen Kohlenwasserstoff, Ketone, Alkohole, Ester, Ether oder eine beliebige Mischung derer handeln. Ein zu dem offenbarten Absorptionsmedium unterschiedliches Absorptionsmedium kann beispielsweise eine oder mehrere Verbindungen der allgemeinen Formel (III), ein oder mehrere Silikonöle, ein oder mehrere Paraffine, ein oder mehrere hochsiedende Ester, wobei die hochsiedenden Ester keine Verbindungen der allgemeinen Formel (I), (II) oder (III) sind, ein oder mehrere Ethylenglykoldialkylether, ein oder mehrere Pyrolidone oder eine beliebige Mischung derer enthalten.

Bei der Wahl eines geeigneten Absorptionsmediums, das zu dem offenbarten Absorptionsmedium unterschiedlich ist, lässt sich der Fachmann in der Regel von praktischen und prozessspezifischen Überlegungen und/oder von seinem allgemeinen Fachwissen leiten (VDI Richtlinien, Nassabscheider: Abgasreinigung durch Absorption (Wäscher), VDI 3679, Blatt 2, Juli 2014).). Das vorliegende Verfahren zur Abreicherung von aromatischem Kohlenwasserstoff umfassend die Verwendung eines Absorptionsmediums enthaltend eine oder mehrere Verbindungen der allgemeinen Formel (I) und/oder der allgemeinen Formel (II) kann demnach auch die Verwendung eines weiteren Absorptionsmediums umfassen, wobei dieses zu dem offenbarten Absorptionsmedium unterschiedlich ist. Es kann dabei bevorzugt sein, dass das zu dem offenbarten Absorptionsmedium unterschiedliche Absorptionsmedium zur Abreicherung von anorganischen Verbindungen aus dem Rohgasstrom verwendet wird. Ein solches Absorptionsmedium kann beispielsweise Wasser, Methanol, Ethanol oder eine beliebige Mischung dieser sein. In der Regel wird Wasser bevorzugt. Wasser kann dabei beispielsweise als demineralisiertes Wasser oder Prozesswasser verwendet werden. Auch kann es bevorzugt sein, dass das offenbarte Absorptionsmedium Di-(isononyl)-1,2-cyclohexansäuredicarboxylat enthält und dass das zum offenbarten Absorptionsmedium unterschiedliche Absorptionsmedium zur Abreicherung von anorganischen Verbindungen aus dem Rohgasstrom verwendet wird. Es kann weiter bevorzugt sein, dass das offenbarte Absorptionsmedium Di-(isononyl)-1,2-cyclohexansäuredicarboxylat enthält und dass das zum offenbarten Absorptionsmedium unterschiedliche Absorptionsmedium zur Abreicherung von anorganischen Verbindungen aus dem Rohgasstrom verwendet wird und Wasser enthält.

Das zu dem offenbarten Absorptionsmedium unterschiedliche Absorptionsmedium wird in der Regel in einer weiteren Verfahrensoperation verwendet. Eine weitere Verfahrensoperation kann eine vor und/oder nachgeschaltete Verfahrensoperation sein. Die Abreicherung von anorganischen Verbindungen aus dem Rohgasstrom unter Verwendung eines zu dem offenbarten Absorptionsmedium unterschiedlichen Absorptionsmediums kann daher in einer weiteren Verfahrensoperation erfolgen.

Um den Rohgasstrom und das offenbarte Absorptionsmedium in Kontakt zu bringen werden diese im Gleichstrom oder im Gegenstrom aneinander vorbeigeführt. Eine Vorbeiführung im Gegenstrom ist dabei als vorteilhaft anzusehen. Der Rohgasstrom und das offenbarte Absorptionsmedium können in allen dem Fachmann bekannten Vorrichtungen, die sich für solche Zwecke eignen, in Kontakt gebracht werden. Solche Vorrichtung werden im Allgemeinen und ihm Rahmen dieser Offenbarung als Wäscher bezeichnet.

Um den Kontakt zwischen Absorptionsmedium und Rohgasstrom zu verbessern ist es in der Regel von Vorteil, dass das Absorptionsmedium eine große Oberfläche aufweist. Eine große Oberfläche kann beispielsweise durch Zerstäubung, Zertropfung oder durch Filmbildung des Absorptionsmediums erreicht werden. Ein Wäscher kann dazu beispielsweise eine oder mehrere Gegen- oder Gleichstromkolonnen mit Füllkörpern, Böden oder mit strukturierten Packungen, einen oder mehrere Sprühapparate, eine oder mehrere Blasensäulen, oder eine beliebige Kombination derer enthalten.

Bei einem Wäscher kann es sich um eine mobile oder um eine fest installierte Vorrichtung handeln. Handelt es sich dem Wäscher um eine mobile Vorrichtung kann der Einsatzort des Wäschers variiert werden. Beispielsweise kann der Wäscher auf einem Wagen installiert sein.

Ein weiterer Gegenstand der Offenbarung kann demnach auch ein Verfahren zur Abreicherung von aromatischem Kohlenwasserstoff aus einem Rohgasstrom, umfassend die Verwendung eines Absorptionsmediums, das eine oder mehrere Verbindungen der allgemeinen Formel (I) und/oder Formel (II) enthält, wobei das Absorptionsmedium und der Rohgasstrom im Gleich- oder Gegenstrom aneinander vorbeigeführt werden oder,
ein Verfahren zur Abreicherung von aromatischem Kohlenwasserstoff aus einem Rohgasstrom, umfassend die Verwendung eines Absorptionsmediums, das Di-(isononyl)-1,2-cyclohexansäuredicarboxylat enthält, wobei das Absorptionsmedium und der Rohgasstrom im Gleich- oder Gegenstrom aneinander vorbeigeführt werden oder,
ein Verfahren zur Abreicherung von aromatischem Kohlenwasserstoff aus einem Rohgasstrom, umfassend die Verwendung eines Absorptionsmediums, das Di-(isononyl)-1,2-cyclohexansäuredicarboxylat enthält und ein weiteres Absorptionsmedium, das von dem obigen Absorptionsmedium unterschiedlich ist, beispielsweise Wasser, wobei das Absorptionsmedium und der Rohgasstrom im Gleich- oder Gegenstrom aneinander vorbeigeführt werden, sein.

Ebenso ist eine Vorrichtung, speziell zur Abreicherung von aromatischem Kohlenwasserstoff aus einem Rohgasstrom, in der das offenbarte Absorptionsmedium mit einem Rohgasstrom im Gleich- oder Gegenstrom in Kontakt gebracht wird Gegenstand der Offenbarung. Bei der offenbarten Vorrichtung kann es sich beispielsweise um einen Wäscher handeln. Es kann aber auch sein, dass ein oder mehrere Wäscher in der Vorrichtung enthalten sind. In der offenbarten Vorrichtung können auch ein oder mehrere Wäscher und eine oder mehrere Regeneriervorrichtungen enthalten sein.

Die Abreicherung von aromatischem Kohlenwasserstoff aus dem Rohgasstrom mit dem offenbarten Absorptionsmedium kann von der Temperatur des Rohgasstroms und/oder der Temperatur des Absorptionsmediums abhängig sein.

Bei der Abreicherung von aromatischem Kohlenwasserstoff aus dem Rohgasstrom mit dem offenbarten Absorptionsmedium hat der Rohgasstrom in der Regel Umgebungstemperatur. Der Rohgasstrom kann aber auch über Umgebungstemperatur erwärmt oder unter Umgebungstemperatur abgekühlt werden. So kann der Rohgasstrom eine Temperatur von -20 bis 200 °C haben. Meist hat der Rohgasstrom eine Temperatur von 0 bis 60 °C. Weiterhin kann der Rohgasstrom eine Temperatur von 10 bis 40 °C haben.

Das Absorptionsmedium hat in der Regel Umgebungstemperatur. Das Absorptionsmedium kann aber auch über Umgebungstemperatur erwärmt oder unter Umgebungstemperatur abgekühlt werden. So kann das Absorptionsmedium eine Temperatur von -20 bis 200°C haben. Meist hat das Absorptionsmedium eine Temperatur von 0 bis 60°C. Weiterhin kann das Absorptionsmedium eine Temperatur von 10 bis 40°C haben.

Rohgasstrom und Absorptionsmedium können unterschiedliche oder gleiche Temperaturen haben. Es kann bevorzugt sein, dass die Temperatur des Rohgasstroms über der Temperatur des Absorptionsmediums liegt. Die Temperatur von Rohgasstrom und Absorptionsmedium kann im Wesentlichen aber auch nicht unterschiedlich sein. So kann die Temperatur von Rohgasstrom und Absorptionsmedium beispielsweise um 20°C oder weniger unterschiedlich sein.

Die Abreicherung von aromatischem Kohlenwasserstoff aus dem Rohgasstrom mit dem offenbarten Absorptionsmedium kann vom Umgebungsdruck abhängig sein. So kann die Abreicherung von aromatischem Kohlenwasserstoff aus dem Rohgasstrom mit dem offenbarten Absorptionsmedium beispielsweise bei Überdruck erfolgen. In der Regel erfolgt die Abreicherung von aromatischem Kohlenwasserstoff aus dem Rohgasstrom mit dem offenbarten Absorptionsmedium bei Normaldruck oder leichtem Überdruck. Leichter Überdruck kann dann vorliegen, wenn der Druck oberhalb des Normaldrucks liegt. So kann der Druck beispielsweise bis zu 80 mbar über dem Normaldruck liegen. Es kann bevorzugt sein, dass der Druck bis zu 50 mbar über dem Normaldruck liegt. Weiter kann es bevorzugt sein, dass der Druck bis zu 20 mbar über dem Normaldruck liegt.

Beim Einstellen der Temperatur von Rohgasstrom und/oder Absorptionsmedium und/oder des Umgebungsdrucks ist der Fachmann von praktischen Überlegungen und dem allgemeinen Fachwissen geleitet, um vorteilhafte Werte für die Prozessführen zu wählen und um eine möglichst effiziente Abreicherung des aromatischen Kohlenwasserstoffs aus dem Rohgasstrom zu gewährleisten.

Nach Absorption des aromatischen Kohlenwasserstoffs im offenbarten Absorptionsmedium ist das Absorptionsmedium mit aromatischem Kohlenwasserstoff beladen. Das mit aromatischem Kohlenwasserstoff beladene Absorptionsmedium kann verworfen oder regeneriert werden.

Wird das mit aromatischem Kohlenwasserstoff beladene Absorptionsmedium verworfen kann es beispielsweise auf eine Fackel geführt und verbrannt werden. Auch kann das mit aromatischem Kohlenwasserstoff beladene Absorptionsmedium zur Energieerzeugung thermisch verwertet werden. Dabei kann es vorteilhaft sein, dass andere fossile und/oder biobasierte Energieträger dem mit aromatischem Kohlenwasserstoff beladenen Absorptionsmedium zugemischt werden, bevor dieses thermisch verwertet wird.

Auch kann das mit aromatischem Kohlenwasserstoff beladene Absorptionsmedium regeneriert werden. Durch Regenerierung kann aromatischer Kohlenwasserstoff und/oder das Absorptionsmedium mit einer geringeren Beladung an aromatischem Kohlenwasserstoff oder frei von aromatischem Kohlenwasserstoff zurückgewonnen werden. Dies kann den Vorteil haben, dass das nach der Regenerierung erhaltene Absorptionsmedium wiederholt zur Abreicherung von aromatischem Kohlenwasserstoff aus einem Rohgasstrom eingesetzt werden kann. Die Regenerierung erfolgt in der Regel in einer dafür geeigneten Regeneriervorrichtung.

Bei einer Regeneriervorrichtung kann es sich um eine mobile oder um eine fest installierte Vorrichtung handeln. Handelt es sich der Regeneriervorrichtung um eine mobile Vorrichtung kann der Einsatzort der Regeneriervorrichtung variiert werden. Beispielsweise kann die Regeneriervorrichtung auf einem Wagen installiert sein.

So kann beispielsweise in einem Verfahren zur Abreicherung von aromatischem Kohlenwasserstoff aus einem Rohgasstrom, umfassend ein Absorptionsmedium, das eine oder mehrere Verbindungen der allgemeinen Formel (I) oder Formel (II) enthält, das Absorptionsmedium regeneriert werden. Auch kann in einem Verfahren zur Abreicherung von aromatischem Kohlenwasserstoff aus einem Rohgasstrom, umfassend ein Absorptionsmedium, das Di-(isononyl)-1,2-cyclohexansäuredicarboxylat enthält, das Absorptionsmedium regeneriert werden.

Die Regenerierung des mit aromatischem Kohlenwasserstoff beladenen Absorptionsmediums kann beispielsweise durch Desorption des aromatischen Kohlenwasserstoffs erfolgen. Desorption des aromatischen Kohlenwasserstoffs kann beispielsweise durch Strippung und/oder Temperaturerhöhung und/oder Druckabsenkung erfolgen. Zur Desorption des aromatischen Kohlenwasserstoffs aus dem beladenen Absorptionsmedium durch Strippung kann das mit aromatischem Kohlenwasserstoff beladene Absorptionsmedium in einer Regeneriervorrichtung mit einem Strippmedium in Kontakt gebracht werden. Der im Absorptionsmedium absorbierte aromatische Kohlenwasserstoff wird dabei teilweise oder vollständig aus dem Absorptionsmedium entfernt und geht in das Strippmedium über. Der dann im Strippmedium enthaltene aromatische Kohlenwasserstoff kann beispielsweise aus diesem auskondensiert und so rückgewonnen werden.

Ein Strippmedium können nicht kondensierbare Gase wie Luft, Stickstoff oder Wasserdampf, Kohlenstoffdioxid oder eine beliebige Mischung derer sein. In der Regel handelt es sich beim Strippmedium um Wasserdampf. Die Regenerierung des mit aromatischem Kohlenwasserstoff beladenen Absorptionsmediums kann demnach beispielsweise mittels Stripping mit Wasserdampf erfolgen.

Um das Strippmedium mit dem, mit aromatischem Kohlenwasserstoff beladenen, Absorptionsmedium in Kontakt zu bringen werden Strippmedium und beladenes Absorptionsmedium in der Regel im Gleich- oder Gegenstrom aneinander vorbeigeführt. Dies erfolgt in einer Regeneriervorrichtung. Um den Kontakt zwischen Strippmedium und Absorptionsmedium zu verbessern kann es vorteilhaft sein, dass das Absorptionsmedium eine große Oberfläche aufweist. Eine große Oberfläche kann beispielsweise durch Zerstäubung, Zertropfung oder durch Filmbildung des Absorptionsmediums erreicht werden. Hierfür können beispielsweise eine oder mehrere Gegen- oder Gleichstromkolonnen mit Füllkörpern, Böden oder mit strukturierten Packungen, einen oder mehrere Sprühapparate, eine oder mehrere Blasensäulen, oder eine beliebige Kombination derer verwendet werden. Eine Regeneriervorrichtung kann demnach eine oder mehrere Gegen- oder Gleichstromkolonnen mit Füllkörpern, Böden oder mit strukturierten Packungen, einen oder mehrere Sprühapparate, eine oder mehrere Blasensäulen, oder eine beliebige Kombination derer enthalten.

Die Regenerierung des mit aromatischem Kohlenwasserstoff beladenen Absorptionsmediums kann von der Temperatur des beladenen Absorptionsmediums, der Temperatur des Strippmediums, dem Verhältnis von beladenem Absorptionsmedium und Strippmedium und/oder dem Umgebungsdruck/Systemdruck abhängen.

Bei der Regenerierung des mit aromatischem Kohlenwasserstoff beladenen Absorptionsmedium hat das beladene Absorptionsmedium in der Regel eine Temperatur von 20 bis 100°C. Das beladene Absorptionsmedium kann dazu erwärmt oder abgekühlt werden. Es kann bevorzugt sein, dass das beladene Absorptionsmedium eine Temperatur von 25 bis 80 und weiter bevorzugt eine Temperatur von 30 bis 70°C hat. Das Strippmedium hat im Allgemeinen eine Temperatur von 20 bis 200°C. Das Strippmedium kann dazu erwärmt oder abgekühlt werden. Es kann bevorzugt sein, dass das Strippmedium eine Temperatur von 25 bis 150°C und weiter bevorzugt eine Temperatur von 30 bis 145°C hat.

Das Erwärmen des beladenen Absorptionsmediums kann mit dem Fachmann an sich bekannten Methoden erfolgen, beispielsweise durch Wärmetauscher. Beim Erwärmen des beladenen Absorptionsmediums kann es weiterhin vorteilhaft sein, dass Absorption und Regenerierung wärmeintegriert sind.

Das beladene Absorptionsmedium und das Strippmedium können unterschiedliche oder gleiche Temperaturen haben.

Die Regenerierung des mit aromatischem Kohlenwasserstoff beladenen Absorptionsmediums findet in der Regel bei Umgebungsdruck statt. Es kann aber auch bevorzugt sein, dass die Regenerierung des mit aromatischem Kohlenwasserstoff beladenen Absorptionsmediums bei verringertem Druck stattfindet. Verringerter Druck kann bedeuten, dass der Druck, bei dem die Regenerierung stattfindet, unterhalb des Normaldrucks liegt. So kann die Regenerierung des mit aromatischem Kohlenwasserstoff beladenen Absorptionsmediums beispielsweise bei einem Druck von 20 mbar bis Normaldruck stattfinden. Bevorzugt kann die Regenerierung bei einem Druck von 50 mbar bis Normaldruck und weiter bevorzugt bei einem Druck von 100 mbar bis Umgebungsdruck stattfinden. So kann die Regenerierung beispielsweise bei einem Druck stattfinden, der 80 mbar, 50 mbar oder 20 mbar unterhalb des Normaldrucks liegt.

Durch Kombination eines Wäschers und einer Regeneriervorrichtung kann aromatischer Kohlenwasserstoff beispielsweise kontinuierlich aus einem Rohgasstrom abgereichert werden. Die Abreicherung von aromatischem Kohlenwasserstoff aus einem Rohgasstrom mit dem offenbarten Absorptionsmedium kann generell auch diskontinuierlich erfolgen.

Das offenbarte Absorptionsmedium ist vorteilhafterweise nur schlecht in Wasser löslich, wodurch sich dieses einfach durch Strippung mit Wasserdampf regenerieren lässt. Um für die Strippung geeignet zu sein, ist es zudem von Vorteil, wenn das offenbarte Absorptionsmedium unter den Bedingungen der Strippung stabil ist. Auch ist das offenbarte Absorptionsmedium vorteilhafterweise bei Umgebungstemperatur nicht leicht flüchtig. Ein Indiz für eine hohe Flüchtigkeit kann ein hoher Dampfdruck sein. Der Dampfdruck des offenbarten Absorptionsmedium ist also vorteilhafterweise gering. Ein geringer Dampfruck kann beispielsweise kleiner 0.05 Pa bei 25°C sein. Es kann bevorzugt sein, dass ein geringer Dampfdruck kleiner als 0.005Pa bei 25°C ist. Es ist ein weiterer Vorteil, wenn das offenbarte Absorptionsmedium einfach bezogen und genutzt werden kann. Wird beispielsweise Biodiesel als Absorptionsmedium eingesetzt, unterliegt dieses speziellen Auflagen und Regularien, da es sich um einen energieintensiven Stoff handelt, der in anderer Verwendung auch zur Energiegewinnung genutzt wird.

Herstellung von Verbindungen der allgemeinen Formel (I)

Die Verbindungen der allgemeinen Formel (I) können entweder kommerziell erworben oder durch Verfahren hergestellt werden, die entweder dem Fachmann bekannt sind, oder sich ihm durch sein allgemeines Fachwissen erschließen.

In der Regel werden die 1,2-Cyclohexandicarbonsäureester meist durch Kernhydrierung der entsprechenden Phthalsäureester erhalten. Die Kernhydrierung kann beispielsweise nach dem in der WO 99/32427 beschriebenen Verfahren erfolgen. Ein besonders geeignetes Kernhydrierungsverfahren beschreibt beispielsweise auch die WO 2011/082991 A2.

Des Weiteren können 1,2-Cyclohexandicarbonsäureester beispielsweise durch Veresterung von 1,2-Cyclohexandicarbonsäure oder geeigneten Derivaten davon mit den entsprechenden Alkoholen erhalten werden. Verfahren und spezifische Verfahrensmaßnahmen sind entweder dem Fachmann bekannt oder erschließen sich ihm durch sein allgemeines Fachwissen (siehe beispielsweise WO 2015/082676, geeignete Veresterungs- Umesterungsverfahren sind der WO 2016/005357 analog zu entnehmen).

Den Verfahren zur Herstellung der Verbindungen der allgemeinen Formel (I) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₇-C₁₂-Alkanolen als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit denen diese dargestellt werden.

C₇-C₁₂-Alkanole, die zur Herstellung der Verbindungen der allgemeinen Formel (I) eingesetzt werden, können geradkettig oder verzweigt sein oder aus Gemischen aus geradkettigen und verzweigten C₇-C₁₂-Alkanolen bestehen. Dazu zählen beispielsweise n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Es kann bevorzugt sein, dass 2-Ethylhexanol, Isononanol und 2-Propylheptanol als Alkanole eingesetzt werden und weiter, dass Isononanol eingesetzt wird.

Herstellung von Verbindungen der allgemeinen Formel (II)

Die Verbindungen der allgemeinen Formel (II) können entweder kommerziell erworben oder durch Verfahren hergestellt werden, die entweder dem Fachmann bekannt sind, oder die sich ihm durch sein allgemeines Fachwissen erschließen.

In der Regel werden die Verbindungen der allgemeinen Formel (II) durch Veresterung von Adipinsäure oder geeigneten Derivaten davon mit den entsprechenden Alkoholen erhalten. Verfahren und spezifische Verfahrensmaßnahmen sind entweder dem Fachmann bekannt oder erschließen sich ihm durch sein allgemeines Fachwissen. Adipinsäuredialkylester mit C₇- bis C₁₂-Alkoholen können beispielsweise analog der in der WO 2016/005357 offenbarten Verfahren unter Verwendung von C₇- bis C₁₂-Alkoholen anstelle von C₃- bis C₅-Alkoholen hergestellt werden.

Den Verfahren zur Herstellung der Verbindungen der allgemeinen Formel (II) ist gemein, dass ausgehend von Adipinsäure oder geeigneten Derivaten davon, eine Veresterung bzw. eine Umesterung durchgeführt wird, wobei die entsprechenden C₇- bis C₁₂-Alkanole als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₇- bis C₁₂-Alkanole, die zur Herstellung der Verbindungen der allgemeinen Formel (II) eingesetzt werden, können geradkettig oder verzweigt sein oder aus Gemischen aus geradkettigen und verzweigten C₇ - bis C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Es kann bevorzugt sein, dass C₇ bis C₁₀-Alkanole wie 2-Ethylhexanol, Isononanol und 2-Propylheptanol eingesetzt werden und weiter bevorzugt, dass 2-Ethylhexanol eingesetzt wird.

Herstellung von Verbindungen der allgemeinen Formel (III)

Die Verbindungen der allgemeinen Formel (III) können entweder kommerziell erworben oder durch Verfahren hergestellt werden, die entweder dem Fachmann bekannt sind, oder die sich ihm durch sein allgemeines Fachwissen erschließen.

In der Regel werden die Terephthalsäuredialkylester durch Veresterung von Terephthalsäure oder geeigneten Derivaten davon mit den entsprechenden Alkoholen erhalten. Verfahren und spezifische Verfahrensmaßnahmen sind entweder dem Fachmann bekannt oder erschließen sich ihm durch sein allgemeines Fachwissen (siehe beispielsweise WO 2015/162142, geeignete Veresterungs- Umesterungsverfahren sind der WO 2016/005357 analog zu entnehmen).

Den Verfahren zur Herstellung der Verbindungen der allgemeinen Formel (III) ist gemein, dass ausgehend von Terephthalsäure oder geeigneten Derivaten davon, eine Veresterung bzw. eine Umesterung durchgeführt wird, wobei die entsprechenden C₇- bis C₁₂-Alkanole als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₇- bis C₁₂-Alkanole, die zur Herstellung der Verbindungen der allgemeinen Formel (III) eingesetzt werden, können geradkettig oder verzweigt sein oder aus Gemischen aus geradkettigen und verzweigten C₇ - bis C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Es kann bevorzugt sein, dass C₇ bis C₁₀-Alkanole wie 2-Ethylhexanol, Isononanol und 2-Propylheptanol eingesetzt werden und weiter bevorzugt, dass 2-Ethylhexanol eingesetzt wird.

Herstellung von C₇- bis C₁₂-Alkohlen zur Synthese der Verbindungen der allgemeinen Formel (I, II, oder III)

Methoden zur Herstellung von C₇- bis C₁₂-Alkoholen sind dem Fachmann allgemein bekannt oder erschließen sich im aus seinem allgemeinen Fachwissen. Meist ist die Herstellung von C₇-bis C₁₂-Alkoholen mit dem technischen Gebiet der Weichmacher(alkohole) assoziiert. Der Fachmann würde daher zu Fragen, betreffend die Herstellung von C₇- bis C₁₂-Alkoholen, das technische Gebiet der Weichmacher konsultieren, bzw, Veröffentlichungen auf diesem Gebiet heranziehen. Die Herstellung von Heptanolen ist beispielsweise in der WO2015/082676 beschrieben. Ebenso ist in der WO2015/082676 die Herstellung von Octanolen (wie 2-Ehtylhexanol), Nonanolen (wie Isononanol), Decanolen, Undecanolen oder Dodecanolen beschrieben.

### Beispiele:

Die Beispiele sollen der Veranschaulichung der Erfindung dienen und keine Einschränkung dieser darstellen.

Die Bestimmung von aromatischem Kohlenwasserstoff erfolgt durch Headspace GC:
Die Headspace Bedingungen sind wie folgt:
   Temperierzeit: 60 min
   Temperiertemperatur: 70°C
   Transferline: 150°C
   Injektion: Head-Space Autosampier, Hochdruckdosierung (1.5 bis 2 bar)
      Für die Probenvorbereitung wurden ca. 50 mg der Probe mit 1 ml dest. Wasser versetzt und analysiert.

In allen Beispielen wurde Di-(isononyl)-1,2-cyclohexansäuredicarboxylat als Hexamoll®DINCH®, Di-(2-ethylhexyl)-adipat als Plastomoll®DOA und Di-(2-Ethylhexyl)-terephthalat als EASTMAN 168TM eingesetzt. Weißöl wurde als WINOG 70 der Firma H&R KGaA eingesetzt.

In Tabelle 1 sind stoffliche Eigenschaften von Hexamoll® DINCH® (Di-(isononyl)-1,2-cyclohexansäuredicarboxylat), Plastomoll® DOA (Di-(2-ethylhexyl)-adipat), Eastmann 168™ (Di-(2-Ethylhexyl)-terephthalat) und Agnique ® ME 18 RD-F (Biodiesel) dargestellt.

| | CAS | Molgewicht g/mol | Dichte bei 20°C kg/m³ | dynamische Viskosität bei 20°C mPa*s | Dampfdruck Pa | Siedepunkt bei Normaldruck °C |
|---|---|---|---|---|---|---|
| Hexamoll® DINCH®* | 166414-78-8 | 424.7 | 948 (DIN 51757/D 4052) | 52 (DIN 51562/D 445) | 0.0001 (20°C) | 394 |
| Plastomoll® DOA* | 103-23-1 | 370.6 | 925 DIN 51757) | 13.7 (ASTM D 7042) | 0.00003 (20°C) | 417 |
| Eastmann 168™* | 6422-86-2 | 390.6 | 980 (ASTM D-4052) | 65.8 (OECD 114) | 0.001 (25°C) | 375 |
| Agnique ® ME 18 RD-F* | 67762-38-3 | | 880 (ISO 6883) | 6 (DIN 53015) | 420 (25°C) | 351 bis 360 |
| WINOG 70* | keine | unbekannt | 867 (15°C) (DIN 51757) | 61 (15°C) (DIN 51562) | 10(20°C) | unbekannt |

| | | | | | | |
|---|---|---|---|---|---|---|
| *Bei den eingesetzten Verbindungen kann es sich abhängig von der Bezugsquelle und/oder des Herstellverfahrens um Mischungen von verschiedenen Verbindungen (oftmals Isomerenmischungen) handeln. Die angegebenen Werte können daher je nach Zusammensetzung der eingesetzten Verbindungen leicht variieren. | | | | | | |

Die Zusammensetzung von Agnique ® ME 18 RD-F ist in Tabelle 2 dargestellt.

| | | |
|---|---|---|
| Wassersanteil | < 0.02 % | ISO 4317 |
| Säurezahl | < 0.5 mg KOH/g | ISO 660 |
| Jodzahl | 100 bis 120 g l/100g | ISO 3961 |
| Dichte | 0.87 bis 0.89 g/cm³ | ISO 6883 |
| Fettsäuremethylester C14:0 | < 0.2% | ISO 5508 |
| Fettsäuremethylester C16 | 3.5 bis 6.0 % | ISO 5508 |
| Fettsäuremethylester C18 | 90 bis 95 % | ISO 5508 |
| Fettsäuremethylester C20 | 1.0 bis 2.0 % | ISO 5508 |
| Fettsäuremethylester C22 | < 0.5 % | ISO 5508 |

Aufgrund der niedrigen Dampfdrücke von Hexamoll® DINCH® (Di-(isononyl)-1,2-cyclohexansäuredicarboxylat), Plastomoll® DOA (Adipinsäuredi-(2-ethylhexyl)-ester) und Eastman 168™ (2-Ethylhexylterephthalat) kommt es bei den genannten Verbindungen nur zu sehr geringen Verlusten durch Verdampfen. Die genannten Verbindungen sind zudem nur sehr schlecht in Wasser löslich, wodurch diese in der Regel einfach durch Strippung mit Wasserdampf regeneriert werden können. Die Strippung von Hexamoll® DINCH®(Di-(isononyl)-1,2-cyclohexansäuredicarboxylat) mit Wasserdampf sollte dabei im Speziellen unproblematisch sein, da Hexamoll® DINCH® (Di-(isononyl)-1,2-cyclohexansäuredicarboxylat) bereits im Herstellverfahren mit Wasserdampf gestrippt wird. Hexamoll® DINCH® (Di-(isononyl)-1,2-cyclohexansäuredicarboxylat) ist im Allgemeinen bis 250°C thermisch stabil.

Hexamoll® DINCH® (Di-(isononyl)-1,2-cyclohexansäuredicarboxylat), Plastomoll® DOA (Adipinsäuredi-(2-ethylhexyl)-ester) und Eastman 168™ (2-Ethylhexyllterephthalat) wurden auf ihre Eignung als Absorptionsmedium zur Abreicherung von aromatischen Kohlenwasserstoffen aus einem Rohgasstrom untersucht und gegen Agnique ® ME 18 RD-F verglichen.

Als Rohgas wird ein mit aromatischem Kohlenwasserstoff beladener Gasstrom benannt, wohingegen der nach Absorption in dem jeweiligen Absorbens erhaltene Gasstrom als Reingas bezeichnet wird. Als Trägergas wurde Stickstoff mit einem Volumenstrom von 100 L/h im Normzustand eingesetzt.

Um die Rohgasbeladung zu erhalten, wurde eine Waschflasche mit 250 g flüssigem BTX Gemisch gefüllt. Das verwendete BTX Gemisch ist eine farblose bis gelbe Flüssigkeit mit einer Dichte von 830 kg/m³ bei 15 °C (DIN 51757) und ist schwerlöslich in Wasser. Der Siedepunkt liegt bei 195 °C (Richtlinie 92/69/EWG, A.2). Das BTX-Gemisch enthält in der Regel 1-15 Gew.-% Benzol, 5-25 Gew.-% Toluol, 7-16 Gew.-% Xylol, 8-17 Gew.-% Styrol, 0-2 Gew.-% Propylbenzol, 1,5-3,5 Gew.-% Cyclopenten, 0-0,5 Gew.-% 1,2,3,4-Tetrahydronaphthalin, 1-10 Gew.-% Naphtalin, 3-7 Gew.-% Ethylbenzol, 1-5 Gew.-% 2-Methylstyrol und 0-0,5 Biphenyl, wobei die Summe der Prozentangaben höchstens 100 beträgt.

Für alle Versuche wurde die Waschflasche zur Sättigung des Gasstromes mit aromatischem Kohlenwasserstoff mit frischen 250 g aus derselben BTX-Gemisch Vorlage gefüllt. Der Stickstoffstrom (Trägergas) wurde über eine gesinterte Glasfritte in der Flüssigkeit fein verteilt, um eine große Stoffaustauschfläche zu gewährleisten. Die Versuchstemperatur wurde auf 23°C gesetzt. Die Versuchsdauer betrug jeweils 60 min. Die Zusammensetzung des Rohgasstromes ist der Tabelle 3 zu entnehmen.

Der mit aromatischem Kohlenwasserstoff beladene Stickstoffstrom (Rohgasstrom) wurde anschließend in eine mit 200 g Absorptionsmedium gefüllte Absorptionsapparatur geleitet. Es wurde eine gelochte Dispergiervorrichtung verwendet und eine Eintauchtiefe dieser von 160 mm eingestellt. Der Flüssigkeitsstand betrug insgesamt etwa 210 mm. Das Absorptionsmedium wurde während des jeweiligen Versuchs zusätzlich gerührt. Der nach Durchströmen des Absorptionsmedium an aromatischem Kohlenwasserstoff abgereicherte Gasstrom (Reingas) wurde durch zwei in Reihe geschaltete und mit jeweils etwa 150 g N,N-Dimethylacetamid gefüllte Waschflaschen geleitet. Der Druck am Ausgang der letzten Waschflache entsprach dem Umgebungsdruck. In der Absorptionsapparatur kann ein leichter Überdruck von 5 bis 10 mbar vorliegen. Die in N,N-Dimethylacetamid gelösten aromatischen Kohlenwasserstoffe wurden mittels Headspace GC ermittelt. Hieraus ergab sich die Restbeladung des Reingasstromes.

Die Beladung des Rohgasstroms wurde analog bestimmt, wobei die Absorptionsapparatur nicht mit einem Absorptionsmedium gefüllt wurde. Aus der Differenz des aus dem Rohgas im N,N-Dimethylacetamid absorbierten aromatischen Kohlenwasserstoffs und des nach durchströmen des jeweiligen Absorptionsmedium im N,N-Dimethylacetamid absorbierten aromatischen Kohlenwasserstoffs wurde die Absorptionsleistung der einzelnen Absorptionsmedien bestimmt. Ein Absorptionsmedium ist in der Regel dann besser zur Absorption von aromatischem Kohlenwasserstoff geeignet, wenn die Differenz hoch ist.

Die Zusammensetzung des Rohgasstroms sowie die Zusammensetzungen der jeweiligen Reingasströme nach Absorption im jeweiligen Absorbens sind in Tabelle 3 dargestellt.

**Tabelle 3:**

| | Rohgasstrom (beladener Stickstoff) | Reingasstrom (nach Absorption in den jeweiligen Absorbentien) | | | | |
|---|---|---|---|---|---|---|
| | | Hexamoll® DINCH® | Plastomoll® DOA | EASTMAN 168™ | Agnique ME 18 RD-F | WINOG 70 |
| | mg/Nm³ | mg/Nm³ | mg/Nm³ | mg/Nm³ | mg/Nm³ | mg/Nm³ |
| Benzol | 8390 | 2686 | 3001 | 3642 | 3138 | 3895 |
| Toluol | 17105 | 1886 | 1899 | 2441 | 1973 | 2816 |
| o-Xylol | 1042 | 34 | 30 | 38 | 45 | 51 |
| m-Xylol | 2753 | 102 | 100 | 128 | 102 | 168 |
| p-Xylol | 1346 | 61 | 63 | 69 | 64 | 81 |
| Ethylbenzol | 3578 | 155 | 136 | 208 | 155 | 229 |
| Styrol | 4107 | 116 | 100 | 132 | 102 | 185 |
| Indan | 194 | 5 | 17 | 6 | 17 | 8 |
| Inden | 319 | 11 | 17 | 6 | 17 | 8 |

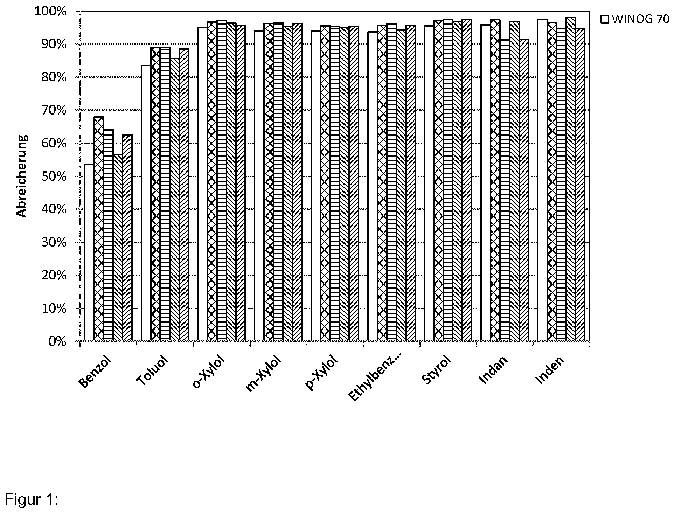

Die Abreicherung der aromatischen Kohlenwasserstoffe aus dem Rohgasstrom ist in Abbildung 1 dargestellt.

Tabelle 3 und Abbildung 1 zeigen, dass durch Hexamoll®DINCH®, Plastomoll®DOA und EASTMAN 168™ insbesondere Benzol und Indan aus dem Rohgasstrom abgereichert werden können.

### Ausführungsbeispiel (Fig. 1):

Der Rohgasstrom 10 wird in einem Wäscher (1) im Gegenstrom mit dem Absorptionsmedium (25) Kontakt gebracht. Der Wäscher wird etwa bei Atmosphärendruck und einer Temperatur von 50°C betrieben. Der im Rohgasstrom enthaltene aromatische Kohlenwasserstoff wird aus der Gasphase abgereichert und geht in das Absorptionsmedium über. Der Reingasstrom (11) verlässt den Wäscher über Kopf. Das mit aromatischem Kohlenwasserstoff beladene Absorptionsmedium (21) verlässt den Wäscher und wird in einem internen Wärmetauscher (2) aufgeheizt. Das so erwärmte beladene Absorptionsmedium (22) wird in einer Regeneriervorrichtung (3) im Gegenstrom mit Wasserdampf (12) als Strippmedium in Kontakt gebracht. Der im Absorptionsmedium enthaltene aromatische Kohlenwasserstoff wird aus diesem abgereichert und geht in das Strippmedium über. Das mit aromatischem Kohlenwasserstoff beladene Strippmedium verlässt die Regeneriervorrichtung über Kopf (13). Das regenerierte Absorptionsmedium (23) wird in einem Wärmetauscher gegen das beladende Absorptionsmedium gekühlt. Das abgekühlte und regenerierte Absorptionsmedium (24) wird in einem Kühler (4) auf die gewünschte Betriebstemperatur gebracht und in den Wäscher (1) rückgeführt

Um flüssigsseitige Druckverluste zu überwinden können beispielsweise Druckerhöhungsmaschinen (5, 6) in die Ströme des Absorptionsmediums eingebaut werden. Der gasseitige Druckverlust kann beispielsweise durch Gebläse vor oder nach dem Wäscher überwunden werden.

Als Absorptionsmedium (25) wird Hexamoll®DINCH®, Plastomoll® DOA oder EASTMAN 168™ eingesetzt.

## Patentansprüche

1. Verfahren zur Abreicherung von aromatischem Kohlenwasserstoff aus einem Rohgasstrom, umfassend die Verwendung eines Absorptionsmediums, das eine oder mehrere Verbindungen der allgemeinen Formel (I): 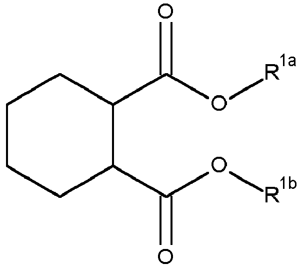
worin R^{1a} und R^{1b} unabhängig voneinander C₇ bis C₁₂-Alkyl sind
und/oder eine oder mehrere Verbindungen der allgemeinen Formel (II): 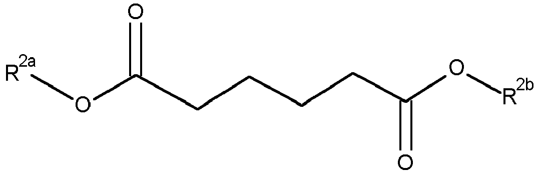
worin R^{2a} und R^{2b} unabhängig voneinander C₇ bis C₁₂-Alykl sind,
enthält.

2. Verfahren nach Anspruch 1, wobei das Absorptionsmedium Di-(isononyl)-1,2-cyclohexansäuredicarboxylat enthält.

3. Verfahren nach Anspruch 1, wobei das Absorptionsmedium Di-(2-ethylhexyl)-adipat enthält.

4. Verfahren nach Anspruch 1 bis 3, wobei ein weiteres Absorptionsmedium verwendet wird, das von dem in Anspruch 1 bis 3 offenbarten Absorptionsmedium unterschiedlich ist.

5. Verfahren nach Anspruch 4, wobei das zu dem in Anspruch 1 bis 3 offenbarten Absorptionsmedium unterschiedliche Absorbtionsmedium zur Abreicherung von anorganischen Verbindungen aus dem Rohgasstrom verwendet wird.

6. Verfahren nach Anspruch 4 bis 5, wobei das zu dem in Anspruch 1 bis 3 offenbarten Absorptionsmedium unterschiedliche Absorptionsmedium in einer weiteren Verfahrensoperation verwendet wird.

7. Verfahren nach einem der vorangegangen Ansprüche, wobei Absorptionsmedium und Rohgasstrom im Gleich- oder Gegenstrom aneinander vorbeigeführt werden.

8. Absorptionsmedium das eine oder mehrere Verbindungen der allgemeinen Formel (I) und/oder Formel (II), gemäß Anspruch 1, enthält.

9. Absorptionsmedium nach Anspruch 8, wobei der Gehalt an einer oder mehrerer Verbindungen der allgemeinen Formel (I) und/oder Formel (II) mindestens 80 Gewichtsprozent ,bezogen auf die Gesamtmasse des Absorptionsmediums, ist.

10. Absorptionsmedium nach Anspruch 8 bis 9, wobei das Absorptionsmedium Di-(isononyl)-1,2-cyclohexansäuredicarboxylat enthält.

11. Absorptionsmedium nach Anspruch 8 bis 9, wobei das Absorptionsmedium Di-(2-ethylhexyl)-adipat enthält.

12. Verwendung einer oder mehrerer Verbindungen der allgemeinen Formel (I) und/oder Formel (II), gemäß Anspruch 1, als Bestandteil eines Absorptionsmediums.

13. Verwendung nach Anspruch 12, wobei eine Verbindung der allgemeinen Formel (I) in der R^{1a} und R^{1b} identisch sind oder eine Verbindung der allgemeinen Formel (II) in der R^{2a} und R^{2b} identisch sind Bestandteil des Absorptionsmediums ist.

14. Verwendung nach Anspruch 12, wobei Di-(isononyl)-1,2-cyclohexansäuredicarboxylat Bestandteil des Absorptionsmediums ist.

15. Verwendung nach Anspruch 12, wobei Di-(2-ethylhexyl)-adipat Bestandteil des Absorptionsmediums ist.

16. Vorrichtung zur Abreicherung von aromatischem Kohlenwasserstoff aus einem Rohgasstrom, wobei das in Anspruch 1 offenbarte Absorptionsmedium mit einem Rohgasstrom im Gleich- oder Gegenstrom in Kontakt gebracht wird.

17. Vorrichtung nach Anspruch 16, wobei ein oder mehrere Wäscher in der Vorrichtung enthalten sind.

18. Vorrichtung nach Anspruch 17, wobei ein oder mehrere Wäscher und eine oder mehrere Regeneriervorrichtungen in der Vorrichtung enthalten sind.
